**Europäisches Patentamt**

**European Patent Office**

**Office européen des brevets**

(19)

(11) Veröffentlichungsnummer: **0 245 629 B1**

(12) **EUROPÄISCHE PATENTSCHRIFT**

(45) Veröffentlichungstag der Patentschrift: **29.01.92**

(51) Int. Cl.⁵: **B23B 31/30**, B23Q 3/12, B23B 31/16

(21) Anmeldenummer: **87104560.5**

(22) Anmeldetag: **27.03.87**

(54) **Spanneinrichtung an Drehspindeln von Drehmaschinen für kraftbetätigte Werkstückhalter, insbesondere Spannfutter.**

(30) Priorität: **15.05.86 DE 3616473**

(43) Veröffentlichungstag der Anmeldung:
**19.11.87 Patentblatt 87/47**

(45) Bekanntmachung des Hinweises auf die
Patenterteilung:
**29.01.92 Patentblatt 92/05**

(84) Benannte Vertragsstaaten:
**AT CH DE ES FR GB IT LI SE**

(56) Entgegenhaltungen:
**EP-A- 0 204 047**
**DE-A- 2 056 866**
**DE-A- 3 328 291**
**DE-U- 8 526 515**
**FR-A- 2 184 969**

(73) Patentinhaber: **Röhm, Günter Horst**
**Heinrich-Röhm-Strasse 50**
**W-7927 Sontheim(DE)**

(72) Erfinder: **Röhm, Günter Horst**
**Heinrich-Röhm-Strasse 50**
**W-7927 Sontheim(DE)**

(74) Vertreter: **Fay, Hermann, Dipl.-Phys. Dr.**
**Ensingerstrasse 21 Postfach 1767**
**W-7900 Ulm (Donau)(DE)**

## Beschreibung

Die Erfindung betrifft eine Spanneinrichtung an Drehspindeln von Drehmaschinen für kraftbetätigte Werkstückhalter, insbes. Spannfutter, mit einem zwischen der Drehspindel und dem Werkstückhalter vorgesehenen, am Drehspindelende festen Spannkopf, der verstellbare kraftbetätigte Spannstücke zum Spannen und Fixieren des Werkstückhalters am Spannkopf aufweist, und mit einer in der hohlen Drehspindel angeordneten, den Spannkopf durchgreifenden Spannstange für den Werkstückhalter, die kraftbetätigt axial zwischen zwei dem offenen bzw. geschlossenen Zustand des Werkstückhalters entsprechenden Positionen verstellbar und durch eine Kupplung mit einem zentralen Spannglied des Werkstückhalters verbunden ist sowie zumindest in ihrer dem offenen Zustand des Werkstückhalters entsprechenden Position relativ zur Drehspindel verdrehbar ist, wobei die Kupplung durch das Verdrehen der Spannstange ein- und auskuppelbar ist.

Bei einer aus der DE-OS 33 28 291 bekannten Spanneinrichtung dieser Art sind die kraftbetätigten Spannstücke radial im Spannkopfkörper geführte Spannbolzen, zu deren Betätigung Kraftkolben in im Spannkopfkörper vorgesehenen Zylinderräumen dienen, und zum Verdrehen der Spannstange ist ein Spannzylinder mit Drehkolben vorgesehen, der am rückwärtigen Ende der Drehspindel axial neben einem weiteren Spannzylinder mit Axialkolben zur axialen Betätigung der Spannstange angeordnet ist. Die für jedes Spannstück eigenen Zylinder-Kolbenanordnungen im Spannkopfkörper und der Spannzylinder mit Drehkolben zum Verdrehen der Spannstange bedingen erheblichen konstruktiven und betriebstechnischen Aufwand.

Aus der DE-OS 30 45 536 ist eine Spanneinrichtung bekannt, bei der die ebenfalls radial im Spannkopfkörper geführten Spannstücke über Keilgetriebe durch ein Spannrohr verstellbar sind, das die Spannstange aufnehmend in der Drehspindel kraftbetätigt axial verstellbar und relativ zur Drehspindel unverdrehbar geführt ist. Zum Ein- und Auskuppeln der ebenfalls rohrförmig ausgebildeten Spannstange am zentralen Spannglied des Werkstückhalters ist eigens eine Kupplungsstange vorgesehen, die kraftbetätigt axial verstellbar innerhalb der Spannstange geführt ist. Die Spannstange und die Kupplungsstange sind wie das Spannrohr unverdrehbar in Bezug auf die Drehspindel. Nachteilig ist hier das Erfordernis der Kupplungsstange und dreier Spannzylinder mit jeweils eigenem Spannkolben für das Spannrohr, die Spannstange und die Kupplungsstange. Diese Spannzylinder bedingen am rückwärtigen Ende der Drehspindel im übrigen eine nachteilig große axiale Baulänge.

Der Erfindung liegt die Aufgabe zugrunde, eine Spanneinrichtung der eingangs genannten Art konstruktiv und betriebstechnisch wesentlich zu vereinfachen und insbes. so auszubilden, daß zwei einfache Axialantriebe am rückwärtigen Ende der Drehspindel genügen, sowohl das Spannrohr als auch die Spannstange und letztere sowohl bezüglich ihrer axialen Spannbewegung als auch ihrer zum Kuppeln dienenden Drehbewegung zu betätigen.

Diese Aufgabe wird nach der Erfindung dadurch gelöst, daß in der Drehspindel zur Verstellung der Spannstücke ein die Spannstange aufnehmendes kraftbetätigtes Spannrohr axial verschiebbar und relativ zur Drehspindel unverdrehbar geführt ist, und daß die Spannstange in Drehrichtung mit dem Spannrohr durch ein Getriebe verbunden ist, das in der dem offenen Zustand des Werkstückhalters entsprechenden Position der Spannstange die Axialbewegung des Spannrohres in eine Drehbewegung der Spannstange umsetzt, wobei ein Verschieben des Spannrohrs im Sinne eines Fixierens bzw. Lösens des Werkstückhalters am Spannkopf die Spannstange im Sinne ihrer Ein- bzw. Auskupplung am Spannglied verdreht.

Im Ergebnis führt bei der erfindungsgemäßen Spanneinrichtung der die Spannstücke betätigende axiale Hub des Spannrohrs über das Getriebe zwangsläufig zu der das Ein- bzw. Auskuppeln der Spannstange am Spannglied bewirkenden Spannstangenverdrehung, so daß es für diese Spannstangenverdrehungen keines eigenen Kraftantriebs bedarf. Es genügt der Axialantrieb für das Spannrohr, der über das Getriebe auch die Drehbewegungen der Spannstange antreibt, so daß je ein Axialantrieb für das Spannrohr und für die Spannstange ausreichen, alle erforderlichen Bewegungen von Spannstange und Spannrohr auszuführen. Gleichzeitig ist über das Getriebe ohne weitere Maßnahmen in einfacher Weise sicher gestellt, daß sich mit der Fixierung des Werkstückhalters am Spannkopf auch die Kupplung zwischen Spannstange und Spannglied schließt und umgekehrt, so daß es insoweit hierfür keiner eigenen Sicherungsmaßnahmen bedarf.

In bevorzugter Ausführungsform ist vorgesehen, daß die Spannstange auf ihrem axialen Hubweg aus der dem offenen Zustand des Werkstückhalters entsprechenden Position bis in die dem geschlossenen Zustand des Werkstückhalters entsprechende Position in ihrer der Einkupplung am Spannglied entsprechenden Drehstellung gegen Verdrehung verriegelt ist, was in besonders einfacher Weise durch das Getriebe erfolgen kann. Auf diese Weise ist auch sehr einfach dafür gesorgt, daß sich die Kupplung zwischen der Spannstange und dem Spannglied nicht lösen kann, solange das Spannglied und damit der Werkstückhalter durch die Spannstange betätigt wird.

Im Hinblick auf eine möglichst einfache konstruktive Ausgestaltung der Erfindung empfiehlt es sich, daß die Spannstange zur Kupplung mit dem Spannglied einen Stangenkopf aufweist, der allein drehbar und über das Getriebe mit dem Spannrohr verbunden ist, wobei der Stangenkopf in einer Drehverbindung zug- und drucküberbertragend an die im übrigen undrehbar in der Drehspindel geführte Spannstange angeschlossen ist. Dies hat den Vorteil, daß die Spannstange mit dem sie axial betätigenden Kraftkolben fest und unverdrehbar verbunden sein kann und auch dieser Kraftkolben im zugehörigen Zylindergehäuse nicht verdrehbar zu sein braucht. Die Drehverbindung ist zweckmäßig aus am Stangenkopf auswärts abstehenden, über den Umfang verteilten Verbindungsnocken und aus einem an der Spannstange einwärts gerichteten Ringflansch gebildet, der Ausnehmungen zum axialen Durchtritt der Verbindungsnocken aufweist, wobei in Umfangsrichtung der Winkelabstand der Verbindungsnocken bzw. Ausnehmungen voneinander größer als der Winkel ist, um den der Stangenkopf zum Ein- und Auskuppeln am Spannglied verdreht werden muß. Die Spannstange und ihr Stangenkopf können dann in einfacher Weise durch axiales Zusammenstecken und anschließendes Verdrehen aneinander montiert werden, wobei die Verbindungsnocken durch die Ausnehmungen hindurch axial hinter den Ringflansch in eine Ringnut eintreten und aus dieser jedenfalls dann nicht austreten können, wenn der Stangenkopf zum Ein- und Auskuppeln am Spannglied verdreht wird.

Das Getriebe zwischen dem Spannrohr und der Spannstange bzw. deren Stangenkopf kann im Rahmen der Erfindung auf verschiedene Weise ausgebildet sein. Eine wegen ihrer Einfachheit besonders bevorzugte Ausführungsform ist dadurch gekennzeichnet, daß das Getriebe von einem am Spannrohr innen festen, gegen die Spannstange bzw. den Stangenkopf vorstehenden Stellstück und von einer an der Spannstange bzw. dem Stangenkopf vorgesehenen Stellkurve gebildet ist, an der das Stellstück bei der Axialverstellung des Spannrohres entlang läuft. Da das Spannrohr in der Drehspindel unverdrehbar geführt ist, bestimmt sich die Verdrehung der Spannstange bzw. des Stangenkopfs aus dem Verlauf der Stellkurve in Längs- und Umfangsrichtung an Spannstange bzw. Stangenkopf. Selbstverständlich besteht im Prinzip stattdessen auch die Möglichkeit, das Stellstück an der Spannstange bzw. dem Stangenkopf und die Stellkurve am Spannrohr vorzusehen. Vorzugsweise ist die Stellkurve an der Außenseite der Spannstange bzw. des Stangenkopfs durch die Hüllfläche von in Axialrichtung nebeneinander liegenden und jeweils zunehmend um die Achse gegeneinander verdrehten Sekanten erzeugt, wobei der Winkel zwischen der ersten und der letzten Sekante dieser Hüllfläche gleich dem zum Ein- und Auskuppeln der Spannstange bzw. des Stangenkopfs am Spannglied benötigten Drehwinkel ist, und das im Axialschnitt zur Spannstange bzw. zum Stangenkopf hin konvex ausgebildete Stellstück besitzt eine entlang einer Sekante verlaufende und die Hüllfläche berührende Scheitelgerade. Auf diese Weise wird in Richtung der jeweiligen Sekante eine entsprechend große Länge der Anlage zwischen dem Stellstück und der Hüllfläche erreicht, was für geringen Verschleiß an Hüllfläche und Stellstück und für die Drehmomentüberbertragung auf die Spannstange bzw. den Stangenkopf vorteilhaft ist.

Weiter ist in bevorzugter Ausführungsform der Erfindung vorgesehen, daß sich an das Ende der Hüllfläche axial eine ebene Sperrfläche anschließt, die durch die dieses Hüllflächenende erzeugende Sekante geht und der das Stellstück zur Verriegelung der Spannstangen- bzw. Stangenkopfdrehung anliegt, wobei die axiale Länge der ebenen Sperrfläche mindestens gleich dem Hubweg der Spannstange zwischen ihren zwei dem offenen bzw. geschlossenen Zustand des Werkstückhalters entsprechenden Positionen ist. Dabei schließt die ebene Sperrfläche an dasjenige Ende der Hüllfläche an, in dem das Stellstück der Hüllfläche anliegt, wenn sich die Spannstange bzw. der Stangenkopf in der dem eingekuppelten Zustand am Spannglied entsprechenden Drehstellung befindet.

Im folgenden wird die Erfindung an einem in der Zeichnung dargestellten Ausführungsbeispiel näher erläutert; es zeigen:

Fig. 1    einen Axialschnitt durch den vorderen Teil der Drehspindel mit dem Spannkopf und dem nur teilweise und gestrichelt angedeuteten Werkstückhalter einer Drehmaschine,

Fig. 2    einen Axialschnitt durch das hintere Ende der Drehspindel mit den Spannzylindern ohne den dazugehörenden Kraftmittelverteiler der Drehmaschine,

Fig. 3    eine Ansicht des Spannkopfes nach Fig. 1 in Richtung des dort eingetragenen Pfeiles III bei abgenommenem Werkstückhalter,

Fig. 4    den Querschnitt durch den Gegenstand der Fig. 1 in Richtung der dort eingetragenen Schnittlinie IV - IV,

Fig. 5    einen Querschnitt in Richtung V - V durch den Gegenstand der Fig. 1.

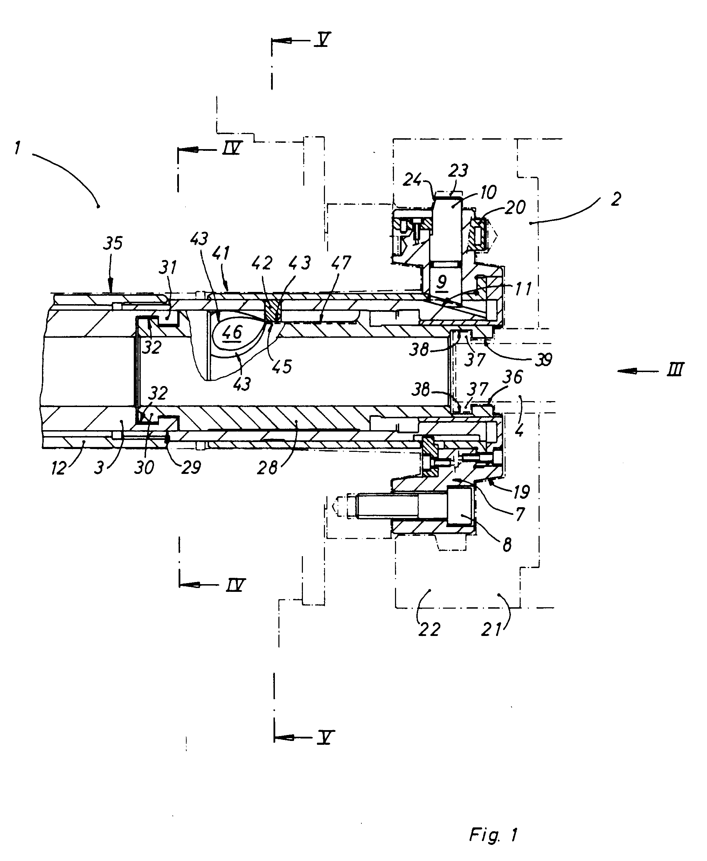

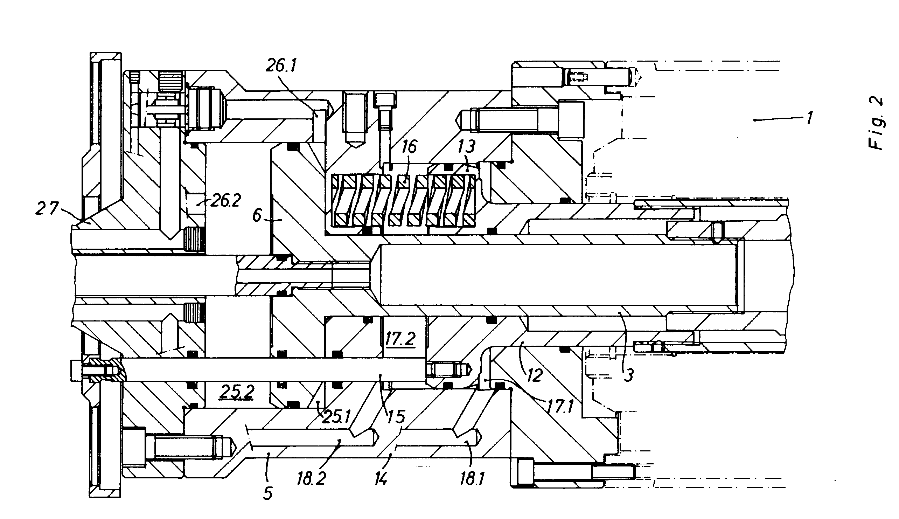

In Fig. 1 ist das am vorderen Ende der Drehspindel 1 als Werkstückhalter angeschlossene kraftbetätigte Spannfutter mit 2 bezeichnet und lediglich teilweise und gestrichelt angedeutet, da es im Zusammenhang mit der Erfindung auf den speziellen Aufbau des Werkstückhalters 2 im einzelnen nicht ankommt, soweit dieser Werkstückhalter 2 nur zur Betätigung seiner Spannelemente, insbesondere seiner Spannbacken ein zentrales, axial verstellbares und von der Spannstange 3 zu betätigendes Spannglied 4 besitzt. Am rückwärtigen Drehspindelende entsprechend Fig. 2 ist ein Spannzylinder 5 angeschlossen, dessen Axialkolben 6 über die in der hohlen Drehspindel 1 verlaufende Spannstange 3 mit dem Spannglied 4 des Werkstückhalters 2 verbunden ist. Zwischen dem vorderen Ende der Drehspindel 1 und dem Werkstückhalter 2 ist ein Spannkopf 7 vorgesehen, dessen Spannkopfkörper mittels bei 8 angedeuteten Schrauben am Spindelende verschraubt und in einer zentralen Öffnung von der Spannstange 3 durchgriffen ist. Der Spannkopf 7 besitzt als Spannstücke 9 radial geführte Spannbolzen mit nach außen bis über die Umfangsfläche des Spannkopfs 7 vorverstellbaren Bolzenköpfen 10. Diese Stellung der Spannstücke 9, durch die der Werkstückhalter 2 fest am Spannkopf 7 verspannt ist, ist in der Zeichnung dargestellt. Die Spannstücke 9 sind über jeweils ein Keilgetriebe 11 durch ein kraftbetätigtes Spannrohr 12 verstellbar, das ebenfalls in der hohlen Drehspindel 1 axial verschiebbar geführt ist und die Spannstange 3 aufnimmt. Das Spannrohr 12 ist relativ zur Drehspindel 1 gegen Verdrehung gesichert. Im einzelnen ist das Spannrohr 12 zur axialen Kraftbetätigung an den Kraftkolben 13 eines Spannzylinders 14 angeschlossen, der in dem zugehörigen Zylindergehäuse durch eine Führungsstange 15 gegen Verdrehungen gesichert ist und in der die Spannstücke 9 radial auswärts ausfahrenden Verstellrichtung des Spannrohres 12, in Fig. 2 also in Richtung nach rechts hin, unter der Kraft von Spannfedern 16 steht, von welchen in Fig. 2 nur eine dargestellt ist. Der in Fig. 2 rechts vom Kraftkolben 13 befindliche Zylinderraum 17.1 ist über eine Leitung 18.1 mit Druckmittel beaufschlagbar, um das Spannrohr 12 nach links gegen die Kraft der Spannfedern 16 bewegen und dadurch die Spannstücke 9 radial im Spannkopf 7 nach innen einziehen zu können, wenn der Werkstückhalter 2 vom Spannkopf 7 gelöst werden soll. Auch der in Fig. 2 links vom Kraftkolben 13 befindliche Zylinderraum 17.2 kann zur Kraftbeaufschlagung des Kolbens mit Druckmittel über die Leitung 18.2 versorgt werden, wobei die Druckmittelbeaufschlagung des Kraftkolbens 13 in diesem Zylinderraum 17.2 die Kraft der Spannfedern 16 verstärkt.

Auf der Seite des Werkstückhalters 2 ist der Spannkopf 7 mit Zentriermitteln in Form eines Kurzkegels 19 für den Werkstückhalter 2 versehen, dem am Werkstückhalter 2 eine Kegelaufnahme entspricht. Außerdem ist die vordere Stirnseite des Spannkopfs 7 mit wenigstens einem Zapfen 20 versehen, der in eine entsprechende Zapfenaufnahme des Werkstückhalters 2 greift, um es gegen Drehungen relativ zum Spannkopf 7 zu sichern. Die Kegelaufnahme und die Zapfenaufnahme befinden sich in einem Werkstückhalterflansch 21, der einen den Spannkopf 7 außen axial zur Drehspindel 1 hin übergreifenden Kragen 22 besitzt, der für den Eingriff der an den Spannstücken 9 vorgesehenen Bolzenköpfe 10 in Form einer Ringnut 23 ausgenommen ist, deren rückwärtige, d. h. zur Drehspindel 1 hin liegende und als Spannfläche für die Bolzenköpfe 10 dienende Seitenwand 24 als Kegelfläche ausgebildet ist, der die Bolzenköpfe 10 mit entsprechend gestalteter schräger Spannfläche derart anliegen, daß bei radial nach außen gedrückten Spannstücken 9 der Werkstückhalterflansch 21 und damit der Werkstückhalter selbst über die Spannflächen und den Kragen 22 axial gegen den Spannkopf 7 gezogen und auf dem Kurzkegel 19 zentriert wird.

Der die im Ausführungsbeispiel ebenfalls rohrförmig ausgebildete Spannstange 3 betätigende und mit der Spannstange 3 fest verbundene Axialkolben 6 ist durch die Führungsstange 15 ebenfalls gegen Verdrehungen gesichert. Die Zylinderräume 25.1, 25.2 rechts und links des Axialkolbens 6 sind über die Leitungen 26.1, 26.2 jeweils mit Druckmittel zu beaufschlagen, je nach der gewünschten Betätigungsrichtung des Axialkolbens 6 bzw. der Spannstange 3. Die Zuführung des Druckmittels zu den Leitungen 18.1, 18.2, 26.1 und 26.2 erfolgt in im einzelnen nicht dargestellter Weise durch einen Kraftmittelverteiler, der drehbar auf einem in Fig. 2 nur noch abgebrochen gezeichneten Stutzen 27 des Zylindergehäuses 5 sitzt, was im vorliegenden Zusammenhang üblich ist und daher keiner weiteren Erläuterungen bedarf.

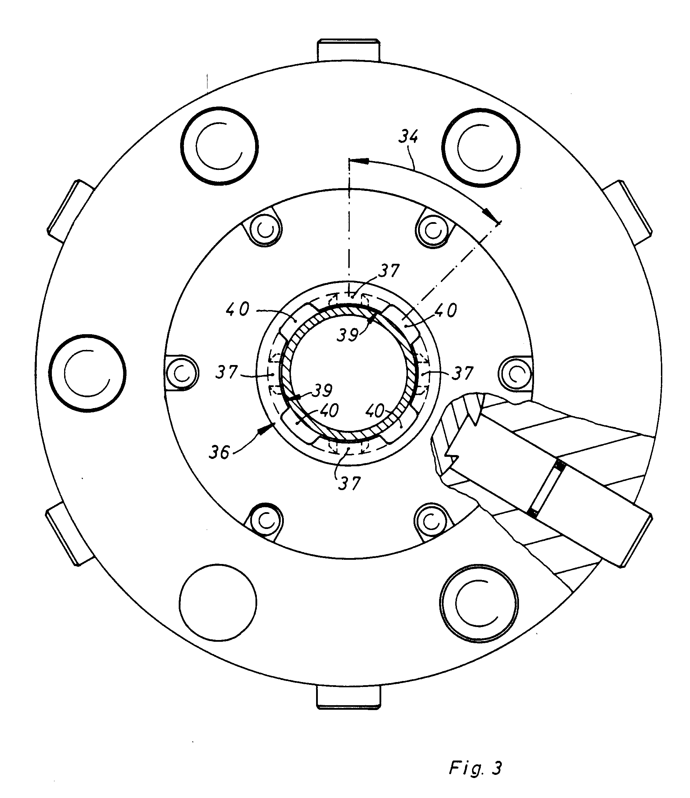

Die Spannstange 3 ist zur Kupplung mit dem Spannglied 4 mit einem Stangenkopf 28 versehen, der in einer Drehverbindung 29 zug- und druckübertragend an die im übrigen undrehbar in der Drehspindel 1 geführte Spannstange 3 angeschlossen ist. Diese Drehverbindung 29 ist am Stangenkopf 28 durch Verbindungsnocken 30 gebildet, die auswärts vom Stangenkopf 28 abstehend über dessen Umfang verteilt sind. An der Spannstange 3 bildet die Drehverbindung 29 einen radial einwärts gerichteten Ringflansch 31, so daß auf der Innenseite der hohlen Spannstange 3 eine Ringnut 32 entsteht. Der Ringflansch 31 besitzt Ausnehmungen 33 zum axialen Durchtritt der Verbindungsnocken 30. In Umfangsrichtung ist der im Ausführungsbeispiel jeweils 90° betragende Winkelabstand der Verbindungsnocken 30 bzw. Ausnehmungen 33 voneinander größer als der in den Fig. 3 bis 5 mit 34 bezeichnete und nur 45° betragende Winkel, um den der Stangenkopf 28 zum Ein- und Auskuppeln am Spannglied 4 in noch zu beschreibender Weise zu verdrehen ist. Diese letzteren Verdrehungen können also nicht dazu führen, daß die Verbindungsnocken 30 sich wieder mit den Ausnehmungen 33 decken und axial durch die Ausnehmungen 33 aus der Ringnut 32 austreten können. Auch das Spannrohr 12 ist aus Gründen einfacherer Konstruktion und Montage axial zweiteilig ausgebildet, wobei die beiden Spannrohrteile in Fig. 1 bei 35 miteinander zug-, druck- und drehfest verbunden sind.

Der Stangenkopf 28 ist durch eine Kupplung 36 mit dem Spannglied 4 verbunden. Diese Kupplung 36 ist, wie schon erwähnt, durch Verdrehen des Stangenkopfes 28 ein- und auskuppelbar und konstruktiv ähnlich wie die Drehverbindung 29 ausgebildet. Sie besteht aus am Spannglied 4 über den Umfang verteilt angeordneten, auswärts gerichteten Kupplungsnocken 37 und aus einer ringnutartigen Kupplungsaufnahme 38 am Stangenkopf 28, die spanngliedseitig radial nach innen vorstehende Kupplungsvorsprünge 39 aufweist. In der dem Entkupplungszustand entsprechenden Drehstellung des Stangenkopfs 28 können die Kupplungsnocken 37 in Lücken 40 zwischen den Kupplungsvorsprüngen 39 hindurch axial in die Kupplungsaufnahme 38 eingeführt werden. In der Kupplungsaufnahme 38 sind das Spannglied und der Stangenkopf relativ gegeneinander verdrehbar, bis die Kupplungsnocken 37 in der dem eingekuppelten Zustand entsprechenden Stellung des Stangenkopfs 28 die Kupplungsvorsprünge 39 axial hintergreifen, wie es Fig. 3 erkennen läßt, in der die Kupplungsvorsprünge 39, die zwischen ihnen verbleibenden, den axialen Durchtritt der Kupplungsnocken 37 ermöglichenden Lücken 40 und gestrichelt die Kupplungsnocken 37 selbst angedeutet sind.

Der Stangenkopf 28 ist in Drehrichtung mit dem Spannrohr 12 durch ein allgemein mit 41 bezeichnetes Getriebe verbunden, das in der dem offenen Zustand des Werkstückhalters 2 entsprechenden, in den Fig. 1 und 2 dargestellten Axialposition der Spannstange 3 die Axialbewegung des Spannrohrs 12 in eine Drehbewegung des Stangenkopfes 28 umsetzt. Im einzelnen hat dabei ein Verschieben des Spannrohrs 12 im Sinne eines Fixierens bzw. Lösens des Werkstückhalters 2 am Spannkopf 7 eine Verdrehung des Stangenkopfs 28 im Sinne seiner Ein- bzw. Auskupplung am Spannglied 4 zur Folge. Die Fig. 1 und 2 zeigen dabei den Zustand, in dem sich das Spannrohr 12 in seiner den Werkstückhalter 2 am Spannkopf 7 fixierenden Axialstellung befindet, und aus dem das Spannrohr 12 in den Fig. 1 und 2 nach links bewegt werden muß, damit der Werkstückhalter 2 vom Spannkopf 7 gelöst werden kann. Der Stangenkopf 28 befindet sich, wie schon erwähnt, in seiner dem eingekuppelten Zustand am Spannglied 4 entsprechenden Drehstellung, axial aber noch in der dem offenen Zustand des Werkstückhalters 2 entsprechenden Position. Soll der Werkstückhalter geschlossen werden, ist die Spannstange 3 aus der in Fig. 1 und 2 gezeigten Axialstellung nach links zu bewegen.

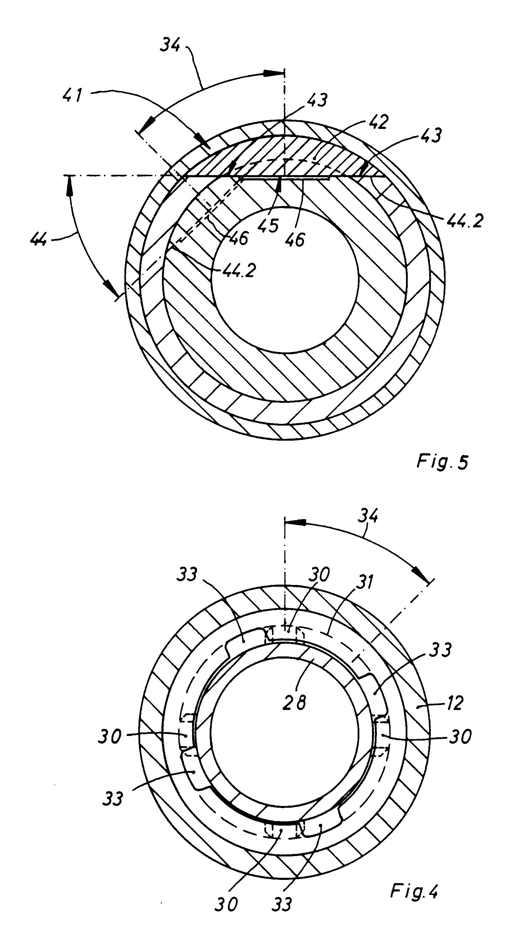

Im einzelnen wird das Getriebe 41 zwischen dem Spannrohr 12 und dem Stangenkopf 28 von einem am Spannrohr innen festen und gegen den Stangenkopf 28 vorstehenden Stellstück 42 und von einer am Stangenkopf 28 vorgesehenen Stellkurve gebildet, an der das Stellstück 42 bei der Axialverstellung des Spannrohres 12 entlang läuft. Die Stellkurve ist an der Außenseite des Stangenkopfs 28 durch die Hüllfläche 43 von in Axialrichtung nebeneinander liegenden und jeweils zunehmend um die Spindelachse gegeneinander verdrehten Sekanten erzeugt. Der Drehwinkel 44 zwischen der ersten 44.1 und der letzten Sekante 44.2 dieser Hüllfläche 43 ist entsprechend Fig. 4 gleich dem zum Ein- und Auskuppeln des Stangenkopfs 28 am Spannglied 4 benötigten Drehwinkel 34. Das im Axialschnitt entsprechend Fig. 1 zum Stangenkopf 28 hin konvex ausgebildete Stellstück 42 besitzt eine entlang einer Sekante verlaufende und die Hüllfläche 43 berührende Scheitelgerade 45, so daß das Stellstück 42 über die gesamte Länge dieser Scheitelgeraden 45 an der Hüllfläche 43 anliegen kann. Jedoch ist im Ausführungsbeispiel die Anordnung so getroffen, daß die Hüllfläche 43 in ihrem mittleren Bereich eine flache Ausnehmung 46 aufweist, so daß die Anlage der Scheitelgeraden 45 des Stellstücks 42 an der Hüllfläche 43 nur in deren Außenbereichen erfolgt. Die Ausnehmung 46 kann als Schmiermittelspeicher dienen. An das in Fig. 1 rechte Ende der Hüllfläche 43, dem also das Stellstück 42 in der ersten Sekante 44.1 anliegt, wenn sich der Stangenkopf 28 in seiner dem eingekuppelten Zustand am Spannglied 4 entsprechenden Drehstellung befindet, schließt sich axial eine ebene Sperrfläche 47 an, die durch die dieses Hüllflächenende erzeugende Sekante 44.1 geht und der das Stellstück 42 anliegt, wenn die Spannstange 3 und damit der Stangenkopf 28 in den Fig. 1 und 2 nach links, d. h. im Sinne eines Schließens des Werkstückhalters 2 bewegt wird. Das hat zur Folge, daß der Stangenkopf 28 auf seinem Hubweg aus der dem offenen Zustand des Werkstückhalters 2 entsprechenden Position bis in die dem geschlossenen Zustand des Werkstückhalters 2 entsprechende Position in seiner der Einkupplung am Spannglied 4 entsprechenden Drehstellung gegen Verdrehung verriegelt ist. Selbstverständlich setzt dies voraus, daß die axiale Länge der ebenen Sperrfläche 47 mindestens gleich dem Hubweg der Spannstange 3 bzw. des Stangenkopfes 28 zwischen diesen zwei dem offenen bzw. geschlossenen Zustand des Werkstückhalters entsprechenden Positionen ist.

Wird im Ergebnis in den Fig. 1 und 2 das Spannrohr 12 bei unveränderter Axialstellung der Spannstange 3 bzw. des Stangenkopfs 28 nach links im Sinne eines Lösens des Werkstückhalters 2 vom Spannkopf 7 bewegt, verdreht sich über das Getriebe 41 der Stangenkopf 28 in solcher Drehrichtung und soweit, daß sich die Kupplung 36 zwischen ihm und dem Spannglied 4 öffnet, d. h., die Kupplungsnocken 37 mit den Lücken 40 zur Deckung gelangen, so daß am Ende, wenn auch die Spannstücke 9 in den Spannkopf 7 radial eingezogen sind, der Werkstückhalter 2 vom Spannkopf 7 axial abgenommen werden kann. Zum Befestigen eines dem Spannkopf 7 neu aufgesetzten Werkstückhalters 2 wird das Spannrohr 12 wieder nach rechts bewegt, wobei nicht nur die Spannstücke 9 radial ausgefahren werden, sondern über das Getriebe 41 auch der Stangenkopf 28 wieder soweit in entgegengesetzter Richtung wie zuvor verdreht wird, daß sich die Kupplung 36 mit dem Spannstück 4 schließt, also die Kupplungsnocken 37 wieder hinter die Kupplungsvorsprünge 39 gelangen und die in Fig. 3 gezeigte Stellung relativ zu den Lücken 40 einnehmen. Ist auf diese Weise der Werkstückhalter 2 am Spannkopf 7 befestigt und der Stangenkopf 28 am Spannglied 4 eingekuppelt, kann zum Schließen des Werkstückhalters die Spannstange 3 und mit ihr der Stangenkopf 28 nach links bewegt werden, wobei das Stellstück 42 entlang der Sperrfläche 47 gleitet und jede weitere Drehung des Stangenkopfes 28 verhindert, so daß das Getriebe 41 die Spannstange 3 gegen jede Drehung sperrt.

**Patentansprüche**

1. Spanneinrichtung an Drehspindeln (1) von Drehmaschinen für kraftbetätigte Werkstückhalter (2), insbes. Spannfutter, mit einem zwischen der Drehspindel (1) und dem Werkstückhalter (2) vorgesehenen, am Drehspindelende festen Spannkopf (7), der verstellbare kraftbetätigte Spannstücke (9) zum Spannen und Fixieren des Werkstückhalters (2) am Spannkopf (7) aufweist, und mit einer in der hohlen Drehspindel (1) angeordneten, den Spannkopf (7) durchgreifenden Spannstange (3) für den Werkstückhalter (2), die kraftbetätigt axial zwischen zwei dem offenen bzw. geschlossenen Zustand des Werkstückhalters (2) entsprechenden Positionen verstellbar und durch eine Kupplung (36) mit einem zentralen Spannglied (4) des Werkstückhalters (2) verbunden ist sowie zumindest in ihrer dem offenen Zustand des Werkstückhalters (2) entsprechenden Position relativ zur Drehspindel (1) verdrehbar ist, wobei die Kupplung (36) durch das Verdrehen der Spannstange (3) ein- und auskuppelbar ist,
dadurch gekennzeichnet, daß in der Drehspindel (1) zur Verstellung der Spannstücke (9) ein die Spannstange (3) aufnehmendes kraftbetätigtes Spannrohr (12) axial verschiebbar und relativ zur Drehspindel (1) unverdrehbar geführt ist, und daß die Spannstange (3) in Drehrichtung mit dem Spannrohr (12) durch ein Getriebe (41) verbunden ist, das in der dem offenen Zustand des Werkstückhalters (2) entsprechenden Position der Spannstange (3) die Axialbewegung des Spannrohres (12) in eine Drehbewegung der Spannstange (3) umsetzt, wobei ein Verschieben des Spannrohres (12) im Sinne eines Fixierens bzw. Lösens des Werkstückhalters (2) am Spannkopf (7) die Spannstange (3) im Sinne ihrer Ein- bzw. Auskupplung am Spannglied (4) verdreht.

2. Spanneinrichtung nach Anspruch 1, dadurch gekennzeichnet, daß die Spannstange (3) auf ihrem axialen Hubweg aus der dem offenen Zustand des Werkstückhalters (2) entsprechenden Position bis in die dem geschlossenen Zustand des Werkstückhalters (2) entsprechende Position in ihrer der Einkupplung am Spannglied (4) entsprechenden Drehstellung gegen Verdrehung verriegelt ist.

3. Spanneinrichtung nach Anspruch 2, dadurch gekennzeichnet, daß die Verriegelung der Spannstange (3) gegen Drehung durch das Getriebe (41) erfolgt.

4. Spanneinrichtung nach einem der Ansprüche 1 bis 3, dadurch gekennzeichnet, daß die Spannstange (3) zur Kupplung mit dem Spannglied (4) einen Stangenkopf (28) aufweist, der allein drehbar und über das Getriebe (41) mit dem Spannrohr (12) verbunden ist, wobei der Stangenkopf (28) in einer Drehverbindung (29) zug- und druckübertragend an die im übrigen undrehbar in der Drehspindel (1) geführte Spannstange (3) angeschlossen ist.

5. Spanneinrichtung nach Anspruch 4, dadurch gekennzeichnet, daß die Drehverbindung (29) am Stangenkopf (28) auswärts abstehende, über den Umfang verteilte Verbindungsnocken (30) und einen an der Spannstange (3) einwärts gerichteten Ringflansch (31) aufweist, der Ausnehmungen (33) zum axialen Durchtritt der Verbindungsnocken (30) aufweist, wobei in Umfangsrichtung der Winkelabstand der Verbindungsnocken (30) bzw. Ausnehmungen (33) voneinander größer als der Winkel (34) ist, um den der Stangenkopf (28) zum Ein- und Auskuppeln am Spannglied (4) zu verdrehen ist.

6. Spanneinrichtung nach einem der Ansprüche 1 bis 5, dadurch gekennzeichnet, daß das Getriebe (41) zwischen dem Spannrohr (12) und der Spannstange (3) bzw. deren Stangenkopf (28) von einem am Spannrohr (12) innen festen, gegen die Spannstange (3) bzw. den Stangenkopf (28) vorstehenden Stellstück (42) und von einer an der Spannstange (3) bzw. dem Stangenkopf (28) vorgesehenen Stellkurve gebildet ist, an der das Stellstück (42) bei der Axialverstellung des Spannrohres (12) entlang läuft.

7. Spanneinrichtung nach Anspruch 6, dadurch gekennzeichnet, daß die Stellkurve an der Außenseite der Spannstange (3) bzw. des Stangenkopfes (28) durch die Hüllfläche (43) von in Axialrichtung nebeneinander liegenden und jeweils zunehmend um die Achse gegeneinander verdrehten Sekanten erzeugt ist, wobei der Drehwinkel (44) zwischen der ersten und der letzten Sekante (44.1, 44.2) der Hüllfläche (43) gleich dem zum Ein- und Auskuppeln der Spannstange (3) bzw. des Stangenkopfes (28) am Spannglied (4) benötigten Drehwinkel (34) ist und das im Axialschnitt zur Spannstange (3) bzw. zum Stangenkopf (28) hin konvex ausgebildete Stellstück (42) eine entlang einer Sekante verlaufende und die Hüllfläche (43) berührende Scheitelgerade (45) aufweist.

8. Spanneinrichtung nach Anspruch 7, dadurch gekennzeichnet, daß sich an das Ende der Hüllfläche (43) axial eine ebene Sperrfläche (47) anschließt, die durch die dieses Hüllflächenende erzeugende Sekante (44.1) geht und der das Stellstück (42) zur Verriegelung der Spannstangen- bzw. Stangenkopfdrehung anliegt, wobei die axiale Länge der ebenen Sperrfläche (47) mindestens gleich dem Hubweg der Spannstange (3) zwischen ihren zwei dem offenen bzw. geschlossenen Zustand des Werkstückhalters (2) entsprechenden Positionen ist.

## Claims

1. Clamping device on workspindles (1) of turning machines for power-operated workholders (2), in particular chucks, having provided between the workspindle (1) and the workholder (2) and fixed on the workspindle end a grip head (7) which has adjustable power-operated clamping pieces (9) for clamping and securing the workholder (2) on the grip head (7), and having disposed in the hollow workspindle (1) and penetrating the grip head (7) a clamping rod (3) for the workholder (2), said rod being adjustable in a power-operated manner axially between two positions corresponding to the open and closed state of the workholder (2) and being connected by a clutch (36) to a central clamping element (4) of the workholder (2) as well as being, at least in its position corresponding to the open state of the workholder (2), rotatable relative to the workspindle (1), with the clutch (36) being engageable and disengageable by means of rotation of the clamping rod (3), characterised in that, for adjusting the clamping pieces (9), a power-operated clamping tube (12) accommodating the clamping rod (3) is guided axially displaceably in the workspindle (1) and non-rotatably relative to the workspindle (1), and in that the clamping rod (3) in the direction of rotation is connected to the clamping tube (12) by a gearing (41) which, in the position of the clamping rod (3) corresponding to the open state of the workholder (2), converts the axial movement of the clamping tube (12) into a rotational movement of the clamping rod (3), with a displacement of the clamping tube (12) in the direction of fixing or releasing the workholder (2) on the grip head (7) rotating the clamping rod (3) in the direction of its engagement or disengagement with the clamping element (4).

2. Clamping device according to claim 1, characterised in that the clamping rod (3), on its axial path of travel from the position corresponding to the open state of the workholder (2) up to the position corresponding to the closed state of the workholder (2), is locked against rotation in its rotary setting corresponding to engagement with the clamping element (4).

3. Clamping device according to claim 2, characterised in that the locking against rotation of the clamping rod (3) is effected by the gearing (41).

4. Clamping device according to one of claims 1 to 3, characterised in that the clamping rod (3) for the purpose of engagement with the clamping element (4) has a rod head (28) which is independently rotatable and is connected by the gearing (41) to the clamping tube (12), with the rod head (28) in a revolving joint (29) being connected in a tension and pressure transmitting manner to the clamping rod (3) which is otherwise non-rotatably guided in the workspindle (1).

5. Clamping device according to claim 4, characterised in that the revolving joint (29) has connecting cams (30), which project outwards from and are distributed over the periphery of the rod head (28), and an annular flange (31), which is directed inwards on the clamping rod (3) and has recesses (33) for the axial passage of the connecting cams (30), with, in a peripheral direction, the angular distance of the connecting cams (30) and recesses (33) from one another being greater than the angle (34) through which the rod head (28) is to be rotated for engagement and disengagement with the clamping element (4).

6. Clamping device according to one of claims 1 to 5, characterised in that the gearing (41) between the clamping tube (12) and the clamping rod (3) or its rod head (28) is formed by a control element (42), which is fixed on the inside of the clamping tube (12) and protrudes towards the clamping rod (3) or the rod head (28), and by a control curve which is provided on the clamping rod (3) or the rod head (28) and along which the control element (42) travels during the axial adjustment of the clamping tube (12).

7. Clamping device according to claim 6, characterised in that the control curve on the outside of the clamping rod (3) or the rod head (28) is produced by the enveloping surface (43) of secants lying adjacent to one another in an axial direction and each rotated to an increasing extent about the axis relative to one another, with the angle of rotation (44) between the first and last secant (44.1, 44.2) of the enveloping surface (43) being equal to the angle of rotation (34) required for engagement and disengagement of the clamping rod (3) or of the rod head (28) with the clamping element (4), and with the control element (42), which in axial section is convex towards the clamping rod (3) or the rod head (28), having a vertex straight line (45) which extends along a secant and touches the enveloping surface (43).

8. Clamping device according to claim 7, characterised in that axially adjoining the end of the enveloping surface (43) is a plane blocking surface (47), which passes through the secant (44.1) producing said enveloping surface end and adjacent to which is the control element (42) for locking the clamping rod or the rod head against rotation, with the axial length of the plane blocking surface (47) being at least equal to the path of travel of the clamping rod (3) between its two positions corresponding to the open and closed state of the workholder (2).

**Revendications**

1. Dispositif de serrage installé sur des broches rotatives (1) de tours pour des porte-outils (2) actionnés mécaniquement, notamment des mandrins de serrage, comportant une tête de serrage (7), qui est prévue sur le porte-outil (2), est montée fixe sur l'extrémité de la broche rotative et comporte des éléments de serrage réglables à commande mécanique (9) servant à serrer et fixer le porte-outil (2) sur la tête de serrage (7), et une barre de serrage (3), qui est prévue pour le porte-outil, est disposée dans la broche rotative creuse (1), traverse la tête de serrage (7) et peut être déplacée axialement, sous l'action d'une force, entre des positions correspondant à l'état ouvert et à l'état fermé du porte-outil (2), et est raccordée, par un accouplement (36), à un organe de serrage central (4) du porte-outil (2), et peut être entraînée en rotation, au moins dans sa position correspondant à l'état ouvert du porte-outil (2), par rapport à la broche rotative (1), l'accouplement (36) pouvant être accouplé et désaccouplé sous l'effet de la rotation de la barre de serrage (3), caractérisé en ce qu'un tube de serrage (12) actionné mécaniquement, qui loge la barre de serrage (3), est guidé dans la broche rotative (1) de manière à être déplaçable axialement, sans pouvoir tourner par rapport à la broche rotative (1), pour réaliser le réglage des éléments de serrage (9), et que la barre de serrage (3) est raccordée, dans le sens de rotation, au tube de serrage (12) par un mécanisme (40), qui, lorsque la tige de serrage (3) est dans sa position correspondant à l'état ouvert du porte-outil (2), convertit le déplacement axial du tube de serrage (12) en un mouvement de rotation de la barre de serrage (3), un déplacement du tube de serrage (12) dans le sens d'une fixation ou d'un desserrage du porte-outil (2) sur la tête de serrage (7) faisant tourner la barre de serrage (3) dans le sens de son accouplement à l'organe de serrage (4) ou de son désaccouplement de ce dernier.

2. Dispositif de serrage selon la revendication 1, caractérisé en ce que la barre de serrage (3) peut être verrouillée contre toute rotation dans sa position en rotation qui correspond à son accouplement à l'organe de serrage (4), sur sa course de déplacement axial depuis la position correspondant à l'état ouvert du porte-outil (2) jusque dans la position correspondant à l'état fermé du porte-outil (2).

3. Dispositif de serrage selon la revendication 2, caractérisé en ce que le verrouillage de la barre de serrage (3) contre toute rotation est réalisé au moyen du mécanisme (41).

**4.** Dispositif de serrage selon l'une des revendications 1 à 3, caractérisé en ce que la barre de serrage (3) comporte, pour son accouplement à l'organe de serrage (4), une tête (28), qui est raccordée au tube de serrage (12) uniquement de manière à pouvoir tourner, et ce par l'intermédiaire du mécanisme (41), la tête (28) de la barre étant raccordée dans un système de liaison en rotation (29), de manière à transmettre une traction et une compression, à la barre de serrage (3) qui traverse la broche rotative (1), en étant par ailleurs bloquée en rotation.

**5.** Dispositif de serrage selon la revendication 4, caractérisé en ce que le système de liaison en rotation (29) comporte des cames de liaison (30) qui font saillie extérieurement sur la tête (21) de la barre et sont réparties sur le pourtour, et une bride annulaire (31), qui est dirigée vers l'intérieur sur la barre de serrage (3) et possède des évidements (33) permettant le passage axial des cames de liaison (30), la distance angulaire, comptée dans la direction circonférentielle, entre les cames de liaison (30) ou les évidements (33) étant supérieure à l'angle (34), dont il faut faire tourner la tête (28) de la barre pour réaliser l'accouplement à l'organe de serrage (4) et le désaccouplement par rapport à ce dernier.

**6.** Dispositif de serrage selon l'une des revendications 1 à 5, caractérisé en ce que le mécanisme (41) est formé, entre le tube de serrage (12) et la barre de serrage (3) ou sa tête (28), par un élément de réglage (42), qui est fixé intérieurement au tube de serrage (12) et fait saillie sur la barre de serrage (3) ou sur la tête (28) de cette barre, et par une came de réglage, qui est prévue sur la barre de serrage (3) ou sur la tête (28) de cette barre et le long de laquelle l'élément de réglage (42) circule lors du déplacement axial du tube de serrage (12).

**7.** Dispositif de serrage selon la revendication 6, caractérisé en ce que la came de réglage située sur la face extérieure de la barre de serrage (3) ou de la tête (28) de cette barre est formée par la surface enveloppe (43) de sécantes qui s'étendent, côte à côte, dans la direction axiale et sont pivotées l'une par rapport à l'autre respectivement de façon croissante autour de l'axe, l'angle de rotation (44) entre les première et dernière sécantes (44.1,44.2) de la surface enveloppe (43) étant égal à l'angle de rotation (34) qui est nécessaire pour accoupler et désaccoupler la barre de serrage (3) ou la tête (28) de cette barre à l'organe de serrage (4), tandis que l'élément de réglage (42) agencé de manière à être convexe, en coupe axiale, en direction de la barre de serrage (3) ou de la tête (28) de cette barre, possède une droite sommitale (45) qui s'étend le long d'une sécante et touche la surface enveloppe (43).

**8.** Dispositif de serrage selon la revendication 7, caractérisé en ce qu'à l'extrémité de la surface enveloppe (43) se raccorde axialement une surface plane de blocage (47), qui passe par cette sécante (44.1), qui forme cette extrémité de la surface enveloppe et contre laquelle l'élément de réglage (42) s'applique pour réaliser un blocage contre une rotation de la barre de serrage ou de la tête de cette barre, la longueur axiale de la surface plane de blocage (47) étant au moins égale à la course de déplacement de la barre de serrage (3) entre ses deux positions qui correspondent à l'état ouvert et à l'état fermé du porte-outil (2).

Fig. 1

Fig. 2

Fig. 3

EP 0 245 629 B1

Fig. 5

Fig. 4

13